# FASCICULE DE BREVET EUROPEEN

(11) **EP 3 642 281 B1**
(45) Date de publication et mention de la délivrance du brevet: **09.04.2025**
(21) Numéro de dépôt: 18732068.4
(22) Date de dépôt: 19.06.2018
(51) Int. Cl.: C08L 53/02, B60C 1/00

(54) **COMPOSITION POLYMÉRIQUE COMPRENANT UN ÉLASTOMÈRE THERMOPLASTIQUE BRANCHÉ ET UN POLYMÈRE THERMOPLASTIQUE STYRÉNIQUE**
POLYMERZUSAMMENSETZUNG MIT EINEM VERZWEIGTEN THERMOPLASTISCHEN ELASTOMER UND EINEM THERMOPLASTISCHEN STYROLPOLYMER
POLYMER COMPOSITION COMPRISING A BRANCHED THERMOPLASTIC ELASTOMER AND A THERMOPLASTIC STYRENE POLYMER

(30) Priorité: 21.06.2017 FR 1755659
(43) Date de publication de la demande: 29.04.2020
(73) Titulaire: Compagnie Générale des Etablissements Michelin, 63000 Clermont-Ferrand (FR)
(72) Inventeur: GORNARD, Benjamin, 63040 Clermont-Ferrand cedex 09 (FR)
(74) Mandataire: M.F.P. Michelin
(86) Numéro de dépôt international: PCT/EP2018/066197
(87) Numéro de publication internationale: WO 2018/234278

(56) Documents cités:
- WO-A1-2012/152686
- WO-A1-2016/034609
- WO-A1-2017/064091
- US-A- 5 036 130

## Description

La présente invention se rapporte à une composition polymérique comprenant un élastomère thermoplastique styrénique et un polymère thermoplastique styrénique particuliers, ainsi qu'à un pneumatique comprenant des couches ou parties formées d'une telle composition, lesdites couches ou parties pouvant être en particulier tout ou partie d'une bande de roulement.

Dans un pneumatique conventionnel, la bande de roulement comprend généralement majoritairement en poids un ou plusieurs élastomères diéniques.

Un objectif constant des manufacturiers de pneumatiques est d'améliorer l'adhérence des pneumatiques sur sol mouillé. En parallèle, un autre objectif est de diminuer la résistance au roulement des pneumatiques. Cependant, ces deux objectifs sont difficiles à concilier en ce que l'amélioration de l'adhérence suppose d'augmenter les pertes hystérétiques tandis que l'amélioration de la résistance au roulement suppose de baisser les pertes hystérétiques. Il existe donc un compromis de performance à optimiser.

Par conséquent, les demanderesses ont précédemment développé des pneumatiques pourvus d'une bande de roulement comprenant un élastomère thermoplastique. Ces pneumatiques présentent un très bon compromis de performance en adhérence et en résistance au roulement.

Mais la rigidité à température ambiante des bandes de roulement peut encore être améliorée.

Par ailleurs, les bandes de roulement en élastomères thermoplastiques ont une mise en œuvre facilitée due à une faible viscosité en température.

Cependant, sur le pneumatique fini, il se peut que la faible rigidité à haute température recherchée pour la mise en œuvre soit alors un problème pour la performance du pneumatique, en particulier en utilisation à haute température. En effet, lors de cycles d'utilisation du pneumatique tel que des freinages, cela peut se traduire dans des cas extrêmes par un ramollissement de la bande de roulement qui aurait pour conséquence de diminuer l'endurance de la bande de roulement.

Ainsi, les performances en tenue en température des bandes de roulement peuvent encore être améliorées.

Par conséquent, il existe un besoin d'améliorer la tenue en température des bandes de roulement en élastomères thermoplastiques, c'est-à-dire de limiter la baisse de rigidité lorsque la température augmente, sans dégrader les possibilités de mise en œuvre de ces bandes de roulement.

Par ailleurs, il est avantageux que la bande de roulement présente de bonnes propriétés mécaniques, en particulier sur le plan de la rigidité pour un allongement rupture donné.

Enfin, les formulations des compositions élastomères sont souvent complexes pour conférer une certaine rigidité. Il existe donc également un besoin de simplifier ces formules.

Les demanderesses ont à présent découvert, de manière inattendue, qu'une composition polymérique comprenant
a) 50 à 100 pce d'un ou plusieurs élastomères thermoplastiques branchés comprenant chacun un bloc élastomère insaturé et au moins trois blocs thermoplastiques styréniques, les blocs thermoplastiques styréniques de chaque élastomère thermoplastique branché représentant de 15 à 50%, en poids du poids de chaque élastomère thermoplastique branché,
b) 10 à 100 pce d'un ou plusieurs polymères thermoplastiques styréniques de masse moléculaire moyenne en poids comprise entre 25000 et 300000 g/mol, de préférence entre 50000 et 200000 g/mol permettait de répondre aux contraintes précédemment formulées, à savoir amélioration de la rigidité à température ambiante, stabilité thermique, amélioration des propriétés mécaniques et simplification de la formulation.

Ainsi, l'invention a pour objet une composition polymérique comprenant
a) 50 à 100 pce d'un ou plusieurs élastomères thermoplastiques branchés comprenant chacun un bloc élastomère insaturé et au moins trois blocs thermoplastiques styréniques, les blocs thermoplastiques styréniques de chaque élastomère thermoplastique branché représentant de 15 à 50%, en poids du poids de chaque élastomère thermoplastique branché,
b) 10 à 100 pce d'un polymère thermoplastique styrénique de masse moléculaire moyenne en poids comprise entre 25000 et 300000 g/mol, de préférence entre 50000 et 200000 g/mol.

Dans la présente invention, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Dans la présente demande, on entend par « partie pour cent d'élastomère » ou « pce », la partie en poids d'un constituant pour 100 parties en poids du ou des élastomères de la matrice élastomérique, c'est-à-dire du poids total du ou des élastomères, qu'ils soient thermoplastiques ou non thermoplastiques, présents dans la matrice élastomérique. Ainsi, un constituant à 60 pce signifiera par exemple 60 g de ce constituant pour 100 g d'élastomère de la matrice élastomérique.

Par élastomère thermoplastique (TPE), on entend, de manière connue, un polymère de structure intermédiaire entre un polymère thermoplastique et un élastomère.

Un élastomère thermoplastique est généralement constitué d'un ou plusieurs segments rigides « thermoplastiques » reliés à un ou plusieurs segments souples « élastomères ».

Le ou les élastomères thermoplastiques branchés présents dans la composition selon l'invention sont ainsi constitués d'un segment souple « élastomère » et d'au moins trois segments rigides « thermoplastiques ».

Ainsi, le ou les élastomères thermoplastiques branchés de la composition selon l'invention comprennent un bloc élastomère et au moins trois blocs thermoplastiques.

Typiquement, chacun de ces segments ou blocs contient au minimum plus de 5, généralement plus de 10 unités de base.

Dans la présente demande, lorsqu'il est fait référence à la température de transition vitreuse d'un élastomère thermoplastique, il s'agit de la température de transition vitreuse relative au bloc élastomère (sauf indication contraire). En effet, de manière connue, les élastomères thermoplastiques présentent deux pics de température de transition vitreuse (Tg, mesurée selon ASTM D3418), la température la plus basse étant relative à la partie élastomère de l'élastomère thermoplastique, et la température la plus haute étant relative à la partie thermoplastique de l'élastomère thermoplastique. Ainsi, les blocs souples des élastomères thermoplastiques se définissent généralement par une Tg inférieure ou égale à la température ambiante (25°C), tandis que les blocs rigides ont une Tg supérieure ou égale à 80°C. Pour être de nature à la fois élastomère et thermoplastique, l'élastomère thermoplastique doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Ainsi, le ou les élastomères thermoplastiques utilisables selon l'invention (donc le ou les blocs élastomères des élastomères thermoplastiques) présentent préférentiellement une température de transition vitreuse qui est inférieure ou égale à 25°C, plus préférentiellement inférieure ou égale à 10°C. Une valeur de Tg supérieure à ces minima peut diminuer les performances de la bande de roulement lors d'une utilisation à très basse température ; pour une telle utilisation, la température de transition vitreuse des élastomères thermoplastiques est plus préférentiellement encore inférieure ou égale à -10°C.

De manière préférentielle également, la température de transition vitreuse des élastomères thermoplastiques utilisables selon l'invention est supérieure à -100°C.

La masse moléculaire moyenne en nombre (notée Mn) des élastomères thermoplastiques est préférentiellement comprise entre 30 000 et 500 000 g/mol, plus préférentiellement comprise entre 40 000 et 400 000 g/mol. En dessous des minima indiqués, la cohésion entre les chaînes d'élastomère des élastomères thermoplastiques, notamment en raison de leur dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée « à chaud ». Par ailleurs, une masse Mn trop élevée peut être pénalisante pour la mise en œuvre. Ainsi, on a constaté qu'une valeur comprise entre 50 000 et 300 000 g/mol était particulièrement bien adaptée à une utilisation des élastomères thermoplastiques dans une bande de roulement de pneumatique.

La masse moléculaire moyenne en nombre (Mn) et la masse moléculaire moyenne en poids (Mw) des élastomères thermoplastiques sont déterminées de manière connue, par chromatographie d'exclusion stérique (SEC). L'échantillon est préalablement solubilisé dans un solvant adapté à une concentration d'environ 2 g/l ; puis la solution est filtrée sur filtre de porosité 0,45 µm avant injection. L'appareillage utilisé est une chaîne chromatographique « WATERS alliance ». Le volume injecté de la solution de l'échantillon de polymère est de 100 µl. Le détecteur est un réfractomètre différentiel « WATERS 2410 » et son logiciel associé d'exploitation des données chromatographiques est le système « EMPOWER ». Les conditions sont adaptables par l'homme du métier. Par exemple dans le cas des élastomères thermoplastiques styréniques, l'échantillon est préalablement solubilisé dans du tétrahydrofurane à une concentration d'environ 1 g/L ; puis la solution est filtrée sur filtre de porosité 0,45 µm avant injection. L'appareillage utilisé est une chaîne chromatographique « WATERS alliance ». Le solvant d'élution est le tétrahydrofurane, le débit de 0,7 mL/mn, la température du système de 35°C et la durée d'analyse de 90 mn. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µL. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité (Ip = Mw/Mn avec Mw masse moléculaire moyenne en poids) du ou des élastomères thermoplastiques est de préférence inférieur à 3 ; plus préférentiellement inférieur à 2, et encore plus préférentiellement inférieur à 1,5.

Les élastomères thermoplastiques branchés utilisables selon l'invention comprennent de préférence chacun au total moins de 10 blocs (élastomérique(s) et thermoplastiques), de préférence de 4 à 8, de préférence encore de 4 à 5.

De préférence, les blocs des élastomères thermoplastiques branchés utilisables selon l'invention ont des masses, de préférence des masses moléculaires moyennes en poids (Mw), supérieures à 2000 g/mol, de préférence supérieures à 5000 g/mol, de préférence encore supérieure à 10000 g/mol.

Les élastomères thermoplastiques présents dans la composition selon l'invention se présentent sous une forme branchée, également parfois appelée ramifiée. Ces élastomères thermoplastiques branchés peuvent alors se composer d'un bloc élastomère branché et de blocs thermoplastiques, situés à l'extrémité de chacune des branches du bloc élastomère.

Selon un mode de réalisation particulier, le ou les élastomères thermoplastiques branchés utilisables selon l'invention se présentent sous une forme étoilée à au moins trois branches.

Par exemple, les élastomères thermoplastiques peuvent alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon un autre mode de réalisation particulier, les élastomères thermoplastiques branchés utilisables selon l'invention se présentent sous une forme dendrimère.

Ainsi, selon ce mode de réalisation, les élastomères thermoplastiques peuvent se composer d'un bloc élastomère dendrimère et de blocs thermoplastiques situés à l'extrémité de chacune des branches du bloc élastomère. Par bloc élastomère dendrimère, on entend un bloc élastomère possédant au moins deux branches, chaque branche se divisant elle-même en au moins deux sous branches, une telle division pouvant se reproduire sur plusieurs générations, à l'image des branches d'un arbre.

Comme expliqué précédemment, le ou les élastomères thermoplastiques branchés présents dans la composition selon l'invention comprennent au moins un bloc élastomère insaturé et au moins trois blocs thermoplastiques.

Par bloc élastomère insaturé, on entend que ce bloc est issu au moins en partie de monomères diènes conjugués, ayant un taux de motifs ou unités d'origine diénique (diènes conjugués) qui est supérieur à 15 % en mole.

On peut aussi parler alors de bloc élastomère « essentiellement insaturé ».

On entend également par bloc élastomère « fortement insaturé », un bloc élastomère ayant un taux de motifs d'origine diénique (diènes conjugués) qui est supérieur à 50 % en moles.

Les blocs élastomères insaturés utilisables selon l'invention peuvent être choisis parmi :
a) tout homopolymère obtenu par polymérisation d'un monomère diène conjugué ayant de 4 à 12 atomes de carbone ;
b) tout copolymère obtenu par copolymérisation d'un ou plusieurs diènes conjugués entre eux ou avec un ou plusieurs composés vinyle aromatique ayant de 8 à 20 atomes de carbone ;
c) un copolymère ternaire obtenu par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
d) un copolymère d'isobutène et d'isoprène (caoutchouc diénique butyl), ainsi que les versions halogénés, en particulier chlorées ou bromées, de ce type de copolymère.

A titre de diènes conjugués conviennent notamment l'isoprène, le butadiène-1,3, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, le 1-vinyl-1,3-cyclohexadiène, et un mélange de ces diènes conjugués ; de préférence, ces diènes conjugués sont choisis parmi l'isoprène, le butadiène et un mélange contenant de l'isoprène et/ou du butadiène.

Selon une variante, les monomères polymérisés pour former un bloc élastomère insaturé peuvent être copolymérisés, de manière statistique, avec au moins un autre monomère de manière à former un bloc élastomère insaturé. Selon cette variante, la fraction molaire en monomère polymérisé autre qu'un monomère diénique, par rapport au nombre total de motifs du bloc élastomère insaturé, doit être telle que ce bloc garde ses propriétés d'élastomère insaturé. Avantageusement la fraction molaire de cet autre co-monomère peut aller de 0 à 50 %, plus préférentiellement de 0 à 45 % et encore plus préférentiellement de 0 à 40 %.

A titre d'illustration, cet autre monomère susceptible de copolymériser avec le monomère premier peut être choisi parmi les monomères éthyléniques tels que l'éthylène, le propylène, le butylène, les monomères de type vinylaromatiques ayant de 8 à 20 atomes de carbone tels que définis ci-après ou encore, il peut s'agir d'un monomère tel que l'acétate de vinyle.

A titre de composés vinylaromatiques conviennent notamment les monomères styréniques, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Ainsi, selon un mode de réalisation, le bloc élastomère peut être un copolymère statistique de type styrène-butadiène (SBR), ce copolymère pouvant être partiellement hydrogéné. Ce bloc SBR possède de préférence une Tg (température de transition vitreuse) mesurée par DSC selon la norme ASTM D3418 de 1999, inférieure à 25°C, préférentiellement inférieure à 10°C, plus préférentiellement inférieure à 0°C et très préférentiellement inférieure à -10°C. De manière préférentielle également, la Tg du bloc SBR est supérieure à -100°C. Conviennent notamment, les blocs SBR ayant une Tg comprise entre 20°C et -70°C et plus particulièrement entre 0°C et -50°C. De manière bien connue, le bloc SBR comprend une teneur en styrène, une teneur en liaisons -1,2 de la partie butadiénique, et une teneur en liaisons -1,4 de la partie butadiénique, cette dernière se composant d'une teneur en liaisons trans-1,4 et d'une teneur en liaisons cis-1,4 lorsque la partie butadiénique n'est pas hydrogénée. De manière préférentielle, on utilise notamment un bloc SBR ayant une teneur en styrène comprise, par exemple dans un domaine allant de 10 % à 60 % en poids, de préférence de 20 % à 50 % en poids, et pour la partie butadiénique, une teneur en liaisons -1,2 comprise dans un domaine allant de 4 % à 75 % (% molaire), et une teneur en liaisons -1,4 comprise dans un domaine allant de 20 % et 96 % (% molaire).

La détermination du taux d'hydrogénation est réalisée par une analyse RMN. Les spectres sont acquis sur un spectromètre Avance 500 MHz BRUKER équipé d'une Cryosonde 1H-X 5 mm. L'expérience RMN 1H quantitative, utilise une séquence simple impulsion 30° et un délai de répétition de 5 secondes entre chaque acquisition. 64 accumulations sont réalisées. Les échantillons (environ 25 mg) sont solubilisés dans le CS2 environ 1 mL, 100 µl de cyclohexane deutéré sont ajouté pour faire le lock pendant l'acquisition. Les déplacements chimiques sont calibrés par rapport à l'impureté protonée du CS2 δppm 1H à 7,18 ppm référencé sur le TMS (δppm 1H à 0 ppm). Le spectre RMN 1H permet de quantifier la microstructure par intégration des massifs de signaux caractéristiques des différents motifs :
- Le styrène provenant du SBR et des blocs polystyrène. Il est quantifiable dans la zone des aromatiques entre 6,0 ppm et 7,3 ppm pour 5 protons (en retirant l'intégrale du signal de l'impureté du CS2 à 7,18 ppm).
- Le PB1-2 provenant du SBR. Il est quantifiable dans la zone des éthyléniques entre 4,6 ppm et 5,1 ppm pour 2 protons.
- Le PB1-4 provenant du SBR. Il est quantifiable dans la zone des éthyléniques entre 5,1 ppm et 6,1 ppm pour 2 protons et en supprimant 1 proton du motif PB1-2.
- Le PB1-2 hydrogéné provenant de l'hydrogénation et ne présentant que des protons aliphatiques. Les CH3 pendant du PB1-2 hydrogéné ont été identifiés et sont quantifiables dans la zone des aliphatiques entre 0,4 et 0,8 ppm pour 3 protons.
- Le PB1-4 hydrogéné provenant de l'hydrogénation et ne présentant que des protons aliphatiques. Il sera déduit par soustraction des protons aliphatiques des différents motifs en le considérant pour 8 protons.

La quantification de la microstructure peut être réalisée en % molaire comme suit : %molaire d'un motif = Intégrale 1H d'un motif/ Σ(intégrales 1H de chaque motif). Par exemple pour un motif de styrène : %molaire du styrène = (Intégrale 1H du styrène) / (Intégrale 1H du styrène + Intégrale 1H du PB1-2 + Intégrale 1H du PB1-4 + Intégrale 1H du PB1-2 hydrogéné + Intégrale 1H du PB1-4 hydrogéné).

De préférence, dans les élastomères thermoplastiques utiles aux besoins de l'invention, le bloc élastomère SBR est hydrogéné de telle manière qu'une proportion allant de 10 à 80 % molaire des doubles liaisons dans la portion butadiène sont hydrogénées. De préférence pour l'invention, les blocs élastomères des élastomères thermoplastiques branchés présentent au total, une masse moléculaire moyenne en nombre (« Mn ») allant de 25 000 g/mol à 350 000 g/mol, de préférence de 35 000 g/mol à 250 000 g/mol de manière à conférer aux élastomères thermoplastiques de bonnes propriétés élastomériques et une tenue mécanique suffisante et compatible avec l'utilisation en bande de roulement de pneumatique.

De manière préférée dans l'invention, le bloc élastomère insaturé est choisi dans le groupe constitué par les polyisoprènes, les polybutadiènes, les copolymères de butadiène et isoprène, les copolymères de styrène et de butadiène, et les mélanges de ces élastomères, ces élastomères étant non hydrogénés ou partiellement hydrogénés.

De manière particulièrement préférée, le bloc élastomère insaturé est choisi parmi les polybutadiènes.

Comme expliqué précédemment, les élastomères thermoplastiques branchés présents dans la composition selon l'invention comprennent également au moins trois blocs thermoplastiques styréniques.

Par bloc thermoplastique, on entend un bloc constitué de monomères polymérisés et ayant une température de transition vitreuse, ou une température de fusion dans le cas des polymères semi-cristallins, supérieure ou égale à 80°C, de préférence variant de 80°C à 250°C, plus préférentiellement variant de 80°C à 200°C, et en particulier variant de 80°C à 180°C.

En effet, dans le cas d'un polymère semi-cristallin, on peut observer une température de fusion supérieure à la température de transition vitreuse. Dans ce cas, on prend en compte pour la définition ci-dessus la température de fusion et non pas la température de transition vitreuse.

Par bloc thermoplastique styrénique, on entend un bloc thermoplastique comprenant des unités issues d'un ou plusieurs monomères styréniques.

De préférence, les blocs thermoplastiques styréniques sont constitués chacun de plus de 75% en poids, de préférence de plus de 85% en poids, de préférence encore de plus de 95% en poids, mieux de 100% en poids, par rapport au poids du bloc thermoplastique styrénique, d'unités issues d'un ou plusieurs monomères styréniques.

De préférence, le ou les monomères styréniques sont choisis parmi le styrène, l'o-, m- ou p-méthylstyrène, l'alpha-méthylstyrène, le beta-méthylstyrène, le 2,6-diméthylstyrène, le 2,4-diméthylstyrène, l'alpha-méthyl-o-méthylstyrène, l'alpha-méthyl-m-méthylstyrène, l'alpha-méthyl-p-méthylstyrène, le beta-méthyl-o-méthylstyrène, le beta-méthyl-m-méthylstyrène, le beta-méthyl-p-méthylstyrène, le 2,4,6-triméthylstyrène, l'alpha-méthyl-2,6-diméthylstyrène, l'alpha-méthyl-2,4-diméthylstyrène, le beta-méthyl-2,6-diméthylstyrène, le beta-méthyl-2,4-diméthylstyrène, l'o-, m- ou p-chlorostyrène, le 2,6-dichlorostyrène, le 2,4-dichlorostyrène, l'alpha-chloro-o-chlorostyrène, l'alpha-chloro-m-chlorostyrène, l'alpha-chloro-p-chlorostyrène, le beta-chloro-o-chlorostyrène, le beta-chloro-m-chlorostyrène, le beta-chloro-p-chlorostyrène, le 2,4,6-trichlorostyrène, l'alpha-chloro-2,6-dichlorostyrène, l'alpha-chloro-2,4-dichlorostyrène, le beta-chloro-2,6-dichlorostyrène, le beta-chloro-2,4-dichlorostyrène l'o-, m- ou p-butylstyrène, l'o-, m- ou p-méthoxystyrène, l'o-, m- ou p-chlorométhylstyrène, l'o-, m- ou p-bromométhylstyrène, les dérivés styrènes substitués par un groupement silyle, et les mélanges de ces monomères.

De manière tout particulièrement préférée, le ou les monomères styréniques sont choisis parmi le styrène, l'alpha-méthylstyrène, et les mélanges de ces monomères, et plus préférentiellement le monomère styrénique est le styrène.

Avantageusement, les blocs thermoplastiques styréniques de chaque élastomère thermoplastique branché de la composition selon l'invention représentent de 20 à 50%, de préférence de 20 à 40%, en poids du poids de chaque élastomère thermoplastique branché.

Comme expliqué précédemment, la composition selon l'invention comprend 50 à 100 pce du ou des élastomères thermoplastiques branchés tels que décrit précédemment.

De préférence, le ou lesdits élastomères thermoplastiques représentent de 70 à 100 pce, de préférence de 80 à 100 pce de la composition selon l'invention.

Outre le ou les élastomères thermoplastiques branchés tels que définis précédemment, la composition selon l'invention peut contenir d'autres élastomères, tels que des élastomères diéniques ou des élastomères thermoplastiques non branchés et/ou non styréniques, représentant de 0 à 50 pce, de préférence de 0 à 30 pce, de préférence encore de 0 à 20 pce.

Il est également possible que la composition selon l'invention comprenne un ou plusieurs élastomères non thermoplastiques.

De manière préférée, le ou les élastomères thermoplastiques branchés tels que définis ci-dessus sont les seuls élastomères de la composition. Autrement dit, le ou les élastomères thermoplastiques branchés définis ci-dessus, selon ce mode de réalisation préféré, représentent 100 pce de la composition polymérique selon l'invention.

Comme expliqué précédemment, la composition polymérique selon l'invention comprend 10 à 100 pce d'un ou plusieurs polymères thermoplastiques styréniques de masse moléculaire moyenne en poids (Mw) comprise entre 25000 et 300000 g/mol, de préférence entre 50000 et 200000 g/mol.

Par polymère thermoplastique, on entend un polymère thermoplastique ayant une température de transition vitreuse, ou une température de fusion dans le cas des polymères semi-cristallins, supérieure ou égale à 80°C, de préférence variant de 80°C à 250°C, plus préférentiellement variant de 80°C à 200°C, et en particulier variant de 80°C à 180°C.

En effet, dans le cas d'un polymère semi-cristallin, on peut observer une température de fusion supérieure à la température de transition vitreuse. Dans ce cas, on prend en compte pour la définition ci-dessus la température de fusion et non pas la température de transition vitreuse.

Il est clair qu'un polymère thermoplastique au sens de la présente invention n'est pas un élastomère thermoplastique.

Par polymère thermoplastique styrénique, on entend un polymère thermoplastique comprenant des unités issues d'un ou plusieurs monomères styréniques.

Par masse moléculaire moyenne d'un polymère thermoplastique styrénique, on entend préférentiellement la masse moléculaire moyenne en poids.

De préférence, le ou les polymères thermoplastiques styréniques sont constitués de plus de 75% en poids, de préférence de plus de 85% en poids, de préférence encore de plus de 95% en poids, mieux de 100% en poids, d'unités issues d'un ou plusieurs monomères styréniques.

Le ou les monomères styréniques utilisables pour le ou les polymères thermoplastiques peuvent être choisis parmi les monomères styréniques utilisables pour les blocs thermoplastiques styréniques du ou des élastomères thermoplastiques branchés présents dans la composition polymérique selon l'invention et cités précédemment.

De manière tout particulièrement préférée, le ou les monomères styréniques sont choisis parmi le styrène, l'alpha-méthylstyrène, et les mélanges de ces monomères, et plus préférentiellement le monomère styrénique est le styrène.

De préférence, le ou lesdits polymères thermoplastiques styréniques représentent de 15 à 85 pce de la composition selon l'invention.

Selon un premier mode de réalisation particulier, le ou lesdits polymères thermoplastiques styréniques utilisables dans la composition selon l'invention représentent de 50 à 85 pce de la composition selon l'invention et présentent une masse moléculaire, de préférence une Mw, comprise entre 50000 et 100000 g/mol.

Selon un deuxième mode de réalisation particulier, le ou lesdits polymères thermoplastiques styréniques utilisables dans la composition selon l'invention représentent de 15 à 50 pce de la composition selon l'invention et présentent une masse moléculaire, de préférence une Mw, comprise entre 120000 et 200000 g/mol.

La composition selon l'invention peut éventuellement comprendre un ou plusieurs polymères thermoplastiques autres que les polymères thermoplastiques styréniques décrits précédemment.

Lorsqu'ils sont présents dans la composition, les polymères thermoplastiques non styréniques représentent de préférence moins de 30 pce, de préférence entre 10 et 25 pce.

Ces polymères thermoplastiques non styréniques peuvent être notamment les polymères de poly(para-phénylène éther) (noté en abrégé « PPE »). Ces polymères thermoplastiques PPE sont bien connus de l'homme du métier, ce sont des résines solides à température ambiante (20°C) compatibles avec les polymères styréniques, qui sont notamment utilisées pour augmenter la température de transition vitreuse d'élastomères thermoplastique dont le bloc thermoplastique est un bloc styrénique (voir par exemple « Thermal, Mechanical and Morphological Analyses of Poly (2,6-dimethyl-1, 4 phenylene oxide)/Styrene-Butadiene-Styrene Blends », Tucker, Barlow and Paul, Macromolecules, 1988, 21, 1678-1685).

De préférence, la composition ne comprend pas de polymère thermoplastique non styrénique.

La composition selon l'invention peut comprendre un système de réticulation.

Lorsque la composition en comprend, le système de réticulation peut notamment être un système dit de vulcanisation, c'est-à-dire à base de soufre (ou d'un agent donneur de soufre) et d'un accélérateur de vulcanisation. A ce système de vulcanisation de base peuvent s'ajouter divers accélérateurs secondaires ou activateurs de vulcanisation connus tels que acide stéarique, oxyde de zinc, dérivés guanidiques, des retardateurs ou des agents antiréversion.

Le système de réticulation peut également être à base d'un ou plusieurs peroxydes.

Par l'expression « à base de », il faut entendre que le système de réticulation comporte un mélange et/ou le produit de réaction des différents constituants utilisés dans le système de réticulation, et en particulier le ou les peroxydes, certains de ces constituants de base étant susceptibles de, ou destinés à, réagir entre eux ou avec les autres constituants de la composition, au moins en partie, lors des différentes phases de fabrication de la composition, en particulier au cours de sa réticulation.

Le ou les peroxydes utilisables selon l'invention peuvent être tout peroxyde connu de l'homme de l'art.

De manière préférée, le ou les peroxydes utilisables selon l'invention sont choisis parmi les peroxydes organiques.

De manière particulièrement préférée, le ou les peroxydes utilisables selon l'invention sont choisis parmi les peroxydes de dialkyle tels que le peroxyde de ditertbutyle (DTBP) ; le peroxyde de dicumyle ; le peroxyde de tertbutylcumyle et le 2,5-diméthyl-2,5-di(tertbutylperoxy)hexane (DBPH), les peroxydes de diacyles tels que le peroxyde de bis(2,4-di-chlorobenzoyle) (DCBP-50) et le peroxyde de benzoyle (BP-50), les peroxydes d'acétals tels que l'éthyle 3,3-di-(t-butylpéroxy)butyrate), les peroxydes d'esters tels que le t-butyl peroxybenzoate et le OO-(t-butyl) O-(2-éthylhexyl) monoperoxycarbonate, les hydroperoxydes tels que le t-amyl hydroperoxyde, et les mélanges de ces composés.

La composition peut également être réticulée au moyen d'un bombardement électronique.

De manière préférée, ce bombardement électronique s'effectue au moyen d'un rayonnement béta.

Ainsi, de manière préférée, la composition selon l'invention est réticulée au moyen d'un bombardement électronique à un niveau d'exposition d'au moins 50 kGy, de préférence allant de 70 à 300 kGy.

De préférence, la composition polymérique selon l'invention ne comprend pas de système de réticulation.

La composition polymérique selon l'invention peut également comprendre une ou plusieurs charges renforçantes.

En particulier, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTI), comme par exemple les noirs N115, N134, N234, N326, N330, N339, N347, N375, ou encore, selon les applications visées, les noirs de séries plus élevées (par exemple N660, N683, N772), voire même N990.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non noire » (« non-black filler ») par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO2), ou du type alumineuse, en particulier de l'alumine (Al2O3). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites « HDS »), on citera par exemple les silices « Ultrasil » 7000 et « Ultrasil » 7005 de la société Evonik, les silices « Zeosil » 1165MP, 1135MP et 1115MP de la société Solvay, la silice « Hi-Sil » EZ150G de la société PPG, les silices « Zeopol » 8715, 8745 et 8755 de la Société Huber, les silices à haute surface spécifique telles que décrites dans la demande WO 03/16837.

Pour coupler la charge inorganique renforçante à l'élastomère thermoplastique, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Le taux volumique de charge renforçante, optionnelle, dans la composition (noir de carbone et/ou charge inorganique renforçante telle que silice) est compris dans un domaine allant de 0 à 30 %, ce qui correspond environ à un taux de 0 à 100 pce pour une composition sans plastifiant. Préférentiellement la composition selon l'invention comprend moins de 30 pce de charge renforçante et plus préférentiellement moins de 10 pce.

Selon une variante préférentielle de l'invention, la composition ne contient pas de charge renforçante.

De la même manière, la composition selon l'invention peut contenir une ou plusieurs charges micrométriques, inertes telles que les charges lamellaires connues de l'homme de l'art.

De préférence, la composition selon l'invention ne contient pas de charge micrométrique.

La composition selon l'invention peut comporter par ailleurs les divers additifs connus de l'homme du métier. On choisira par exemple un ou plusieurs additifs choisis parmi les agents de protection tels que antioxydants ou antiozonants, anti-UV, les divers agents de mise en œuvre ou autres stabilisants, les charges non renforçantes.

De manière préférentielle, la composition selon l'invention ne contient aucun de ces additifs.

La présente invention a encore pour objet un pneumatique comprenant au moins une couche constituée d'une composition polymérique telle que définie précédemment.

Par couche, on entend au sens de la présente invention une bande ou tout autre élément tridimensionnel d'épaisseur relativement faible par rapport à ses autres dimensions, dont le rapport de l'épaisseur sur la plus grande des autres dimensions est inférieur à 0,5, de préférence inférieur à 0,1.

De préférence, la couche est tout ou partie d'une bande de roulement.

La présente invention a enfin pour objet un pneumatique comprenant une bande de roulement comprenant une composition polymérique telle que définie précédemment dans tout ou partie de sa bande de roulement.

La bande de roulement peut-être montée sur un pneumatique de manière classique, ledit pneumatique comprenant en plus de la bande de roulement, un sommet, deux flancs et deux bourrelets, une armature de carcasse ancrée aux deux bourrelets, et une armature de sommet.

Optionnellement, le pneumatique selon l'invention peut comprendre en outre une sous-couche ou une couche d'adhésion entre la portion sculptée de la bande de roulement et l'armature de sommet.

De manière générale, le pneumatique selon l'invention est destiné à équiper des véhicules à moteur de type tourisme, SUV (« Sport Utility Vehicles »), deux roues (notamment motos), avions, ainsi que des véhicules industriels tels que des camionnettes, des poids-lourds et autres véhicules de transport ou de manutention.

A titre de poids lourds, on pourra notamment comprendre des métros, des bus et des engins de transport routier tels que camions, tracteurs, remorques et véhicules hors-la-route comme les engins agricoles ou de génie civil.

Le procédé de préparation d'un pneumatique tel que défini ci-dessus, comprend généralement les étapes suivantes :
- extrusion ou co-extrusion de la bande de roulement, puis
- pose de la bande de roulement extrudée sur le pneumatique, puis
- cuisson du pneumatique.

Ainsi, la bande de roulement du pneumatique selon l'invention est tout d'abord préparée de façon classique, par incorporation des différents composants dans une extrudeuse bi-vis, de façon à réaliser la fusion de la matrice et une incorporation de tous les ingrédients, puis utilisation d'une filière permettant de réaliser le profilé.

Les différents composants de la bande de roulement sont en particulier les élastomères thermoplastiques vus précédemment qui sont disponibles par exemple sous la forme de billes ou de granulés.

La bande de roulement est ensuite posée sur le pneumatique.

Le pneumatique est ensuite cuit. La bande de roulement est alors généralement sculptée dans le moule de cuisson du pneumatique.

### Exemples

### Essais de traction

Ces essais de traction permettent de déterminer les modules d'élasticité et les propriétés à la rupture et sont basées sur la norme française NF T 46-002 de septembre 1988. Un traitement des enregistrements de traction permet également de tracer la courbe de module en fonction de l'allongement. Le module utilisé ici étant le module sécant vrai mesuré en première élongation, calculé en se ramenant à la section initiale de l'éprouvette. On mesure en première élongation à 23°C ± 2°C les modules sécants vrais (ou contraintes vraies, en MPa) à 10% d'allongement notés MSV10.

### Mesures modules G*

Le module complexe dynamique G* est mesuré sur un viscoanalyseur (Metravib V A4000). On enregistre la réponse d'un échantillon de composition (éprouvette cylindrique de 4 mm d'épaisseur et de 400 mm2 de section), soumis à une sollicitation sinusoïdale en cisaillement simple alterné, à contrainte imposée de 0,7 MPa à la fréquence de 10Hz, en fonction de la température selon la norme ASTM D 1349-99. On relève en particulier les valeurs du module G* à 23 et 80°C.

### Préparation des compositions

Les compositions suivantes sont préparées. Les formulations sont données dans le tableau 1 et sont exprimées en pce, le SBS étant considéré ici comme un élastomère dans son entièreté.

La composition A0 est une composition référence, avec les moyens d'obtention usuels de mélanges d'élastomères de haut module.

La composition C0 est donnée à titre de comparaison car elle comprend un SBS de type linéaire.

Les compositions C1 et C2 sont conformes à l'invention (SBS étoilé + PS).

De même la composition C3 est donnée à titre de comparaison car elle comprend un PS de masse moléculaire inférieure à 25000g/mol.

Enfin les compositions C4 et C5 sont conformes à la présente invention.

**Tableau 1**

| Compositions | A0 | C0 | C1 | C2 | C3 | C4 | C5 |
|---|---|---|---|---|---|---|---|
| SBS linéaire (a) | | 100 | | | | | |
| SBS étoilé (b) | | | 100 | 100 | 100 | 100 | 100 |
| Polystyrène bas poids (c) | | | | | 76 | | |
| Polystyrène poids moyen (d) | | 22 | 22 | | | 76 | |
| Polystyrène haut poids (e) | | | | 22 | | | 76 |
| NR (f) | 100 | | | | | | |
| Noir de carbone (g) | 75 | | | | | | |
| Huile paraffinique (i) | 3 | | | | | | |
| Colophane (j) | 2 | | | | | | |
| Diphénylolpropane (k) | 7 | | | | | | |
| Résine Formophénolique (h) | 5 | | | | | | |
| Résinate de cobalt (l) | 3 | | | | | | |
| Hexaméthoxyméthylmélamine (m) | 6 | | | | | | |
| ZnO (n) | 9 | | | | | | |
| Acide stéarique (o) | 1 | | | | | | |
| 6PPD (p) | 2 | | | | | | |
| HMT (q) | 3 | | | | | | |
| Soufre | 5 | | | | | | |
| CBS (r) | 1 | | | | | | |

(a) Copolymère linéaire SBS comprenant 30% de polystyrene Kraton D1101 (Mw=110000 g/mol)
(b)Copolymère étoilé SBS comprenant 31% de polystyrene Kraton D1184 (Mw=200000 g/mol)
(c)Polystyrène de Mw 1 200g/mol : Scientific Polymer
(d)Polystyrène de Mw 35 000g/mol : Sigma Aldrich
(e)Polystyrène de Mw 192 000g/mol : Sigma Aldrich
(f) Caoutchouc Naturel
(g)Noir de carbone N326 (dénomination selon la norme ASTM D-1765) ;
(h)Résine formophénolique novolac (« Peracit 4536K » de la société Perstorp) ;
(i) Huile paraffinique (Tudalen 1968 - Société Klaus, Dahkele)
(j) Colophane (de la société Sigma-Aldrich)
(k)Diphenylolproprane (de la Société Chimprom)
(l) Resinate de cobalt (de la Société Pfaltz et Bauer)
(m) Hexamethoxymethylmelamine (Westco HMM de la société Western Reserve Chemical )
(n)Oxyde de zinc (grade industriel - société Umicore) ;
(o)Stéarine (« Pristerene 4931 » de la société Uniqema) ;
(p)N-1,3-diméthylbutyl-N-phénylparaphénylènediamine (Santoflex 6-PPD de la société Flexsys) ;
(q)Hexaméthylènetétramine (de la société Degussa) ;
(r) N-cyclohexyl-benzothiazyl sulphénamide (Santocure CBS de la société Flexsys).

Les mélanges sont réalisés au mélangeur interne, selon la procédure indiquée ci-dessous :

| Température | Actions |
|---|---|
| 90°C | Introduction TPS |
| 100°C | Introduction polystyrène |
| 105°C | Coup pilon |
| 115°C | Coup pilon |
| 125°C | Tombée du mélange |

Une fois les mélanges obtenus et tombés, on réalise une mise en forme sous presse pour pouvoir les caractériser.
Température : 130°C
Temps : environ 1 min
Pression : environ 30 bars

### 1. Propriétés dynamiques

Les mélanges sont caractérisés en propriétés dynamiques. Le tableau 2 illustre à la fois les valeurs de modules G* atteintes ainsi que leur maintien en température pour les compositions selon l'invention C1, C2, C4 et C5.

**Tableau 2**

| Composition | G* 23°C (MPa) | G* 80°C (MPa) | Ratio (%) (G*80°C/G*23°C) |
|---|---|---|---|
| A0 | 27,3 | 19 | 69,6 |
| C0 | 7,9 | 1,5 | 19,0 |
| C1 | 45,1 | 17,8 | 39,5 |
| C2 | 38,8 | 23,6 | 60,8 |
| C3 | 76,1 | 1,18 | 1,6 |
| C4 | 120 | 29 | 24,2 |
| C5 | 183 | 121 | 66,1 |

On note ainsi en comparant les niveaux de module de la composition C1 (SBS étoilé) par rapport à la composition C0 (SBS linéaire) que ceux-ci sont bien plus importants et que la stabilité thermique (rapport G*(80°C)/G*(23°C)) est améliorée.

Cette amélioration de module et de stabilité thermique (chute décalée à une température plus élevée, qui se traduit par un rapport G*(80°C)/G*(23°C) plus élevé) est encore plus nette avec la composition C2 (SBS étoilé avec un PS de plus haute masse que dans C1).

De même on observe une amélioration similaire des propriétés de module et de tenue thermique des compositions C4 et C5 comparativement à la composition C3.

Ainsi, si l'on considère les ratios de modules entre 80°C et 23°C (critère de stabilité en température), on constate que ceux-ci sont bien plus élevés quand le polystyrène est de haute masse (C2 comparé à C1 ou C4 et C5 comparés à C3) est utilisé. On a d'ailleurs dans ces cas de figure des stabilités en température proches de la composition A0.

### 2. Propriétés mécaniques

Les mêmes compositions sont par ailleurs caractérisées en propriétés mécaniques.

Les résultats donnant les allongements rupture et les modules sécants vrais (MSV) sont présentés dans le tableau 3.

**Tableau 3**

| Composition | Allongement Rupture (%) | MSV 10% (MPa) | Allongement rupture (base 100) | MSV 10% (base 100) |
|---|---|---|---|---|
| A0 | 183 | 60,2 | 16 | 336 |
| C0 | 1110 | 17,9 | 100 | 100 |
| C1 | 1110 | 38,3 | 100 | 214 |
| C2 | 1060 | 53 | 95 | 296 |

La meilleure stabilité en température s'accompagne également de meilleures propriétés mécaniques vue en élongation. Ainsi, en comparant C1 à C0 (étoilé vs linéaire), on note que la rigidité (module sécant vrai à faible déformation) est doublée pour un même allongement rupture.

De même, en comparant C2 à C1 (polystyrène de plus haut poids par rapport au polystyrène de poids moyen), on note que les propriétés sont encore améliorées (module plus élevé pour un allongement rupture quasi identique).

De même, C2 présente un équilibre de propriété plus intéressant que A0, avec un MSV 10% du même ordre mais des propriétés d'allongements ruptures bien meilleures.

## Revendications

1. Composition polymérique comprenant
a) 50 à 100 pce d'un ou plusieurs élastomères thermoplastiques branchés comprenant chacun un bloc élastomère insaturé et au moins trois blocs thermoplastiques styréniques, les blocs thermoplastiques styréniques de chaque élastomère thermoplastique branché représentant de 15 à 50%, en poids du poids de chaque élastomère thermoplastique branché,
b) 10 à 100 pce d'un ou plusieurs polymères thermoplastiques styréniques de masse moléculaire moyenne en poids comprise entre 25000 et 300000 g/mol, de préférence entre 50000 et 200000 g/mol.

2. Composition selon la revendication 1 **caractérisée en ce que** le ou les élastomères thermoplastiques branchés se présentent sous ou forme étoilée à au moins trois branches ou sous une forme dendrimère.

3. Composition selon l'une quelconque des revendications précédentes **caractérisée en ce que** les blocs thermoplastiques styréniques sont constitués chacun de plus de 75% en poids, de préférence de plus de 85% en poids, de préférence encore de plus de 95% en poids, mieux de 100% en poids, par rapport au poids du bloc thermoplastique styrénique, d'unités issues d'un ou plusieurs monomères styréniques.

4. Composition selon l'une quelconque des revendications précédentes, **caractérisée en ce que** les blocs thermoplastiques styréniques de chaque élastomère thermoplastique branché représentent de 20 à 50%, de préférence de 20 à 40%, en poids du poids de chaque élastomère thermoplastique branché.

5. Composition selon l'une quelconque des revendications précédentes **caractérisée en ce que** le ou lesdits élastomères thermoplastiques représentent de 70 à 100 pce, de préférence de 80 à 100 pce de la composition.

6. Composition selon l'une quelconque des revendications précédentes, **caractérisée en ce que** le ou les élastomères thermoplastiques branchés représentent 100 pce de la composition.

7. Composition selon l'une quelconque des revendications précédentes, **caractérisé en ce que** le ou les polymères thermoplastiques styréniques sont constitués de plus de 75% en poids, de préférence de plus de 85% en poids, de préférence encore de plus de 95% en poids, mieux de 100% en poids, d'unités issues d'un ou plusieurs monomères styréniques.

8. Composition selon l'une quelconque des revendications 3 à 7 **caractérisée en ce que** le monomère styrénique des blocs thermoplastiques styréniques est le styrène.

9. Composition selon l'une quelconque des revendications précédentes **caractérisée en ce que** le ou les polymères thermoplastiques styréniques représentent de 15 à 85 pce de la composition.

10. Composition selon l'une quelconque des revendications précédentes **caractérisée en ce que** le ou lesdits polymères thermoplastiques styréniques utilisables dans la composition selon l'invention représentent de 50 à 85 pce de la composition selon l'invention et présentent une masse moléculaire moyenne en poids comprise entre 50000 et 100000 g/mol.

11. Composition selon l'une quelconque des revendications 1 à 9 **caractérisée en ce que** le ou lesdits polymères thermoplastiques styréniques utilisables dans la composition selon l'invention représentent de 15 à 50 pce de la composition selon l'invention et présentent une masse moléculaire moyenne en poids comprise entre 120000 et 200000 g/mol.

12. Composition selon l'une quelconque des revendications précédentes **caractérisée en ce qu'**elle comprend un système de réticulation choisi parmi les systèmes de vulcanisation et les systèmes de réticulation à base d'un ou plusieurs peroxydes.

13. Composition selon l'une quelconque des revendications 1 à 11 **caractérisée en ce qu'**elle est réticulée au moyen d'un bombardement électronique.

14. Pneumatique comprenant au moins une couche constituée d'une composition polymérique telle que définie à l'une quelconque des revendications 1 à 13.

15. Pneumatique comprenant une bande de roulement comprenant une composition polymérique telle que définie à l'une quelconque des revendications 1 à 13 dans tout ou partie de sa bande de roulement.

## Patentansprüche

1. Polymerzusammensetzung, umfassend
a) 50 bis 100 phe eines oder mehrerer verzweigter thermoplastischer Elastomere, die jeweils einen ungesättigten Elastomerblock und mindestens drei thermoplastische Styrolblöcke umfassen, wobei die thermoplastischen Styrolblöcke jedes verzweigten thermoplastischen Elastomers 15 bis 50 Gew.-% des Gewichts jedes verzweigten thermoplastischen Elastomers ausmachen;
b) 10 bis 100 phe eines oder mehrerer thermoplastischer Styrolpolymere mit einer gewichtsmittleren Molmasse zwischen 25.000 und 300.000 g/mol, vorzugsweise zwischen 50.000 und 200.000 g/mol.

2. Zusammensetzung nach Anspruch 1, **dadurch gekennzeichnet, dass** das bzw. die verzweigten thermoplastischen Elastomere sternverzweigt mit mindestens drei Verzweigungen oder in Dendrimerform vorliegen.

3. Zusammensetzung nach einem der vorhergehenden Ansprüche, **dadurch gekennzeichnet, dass** die thermoplastischen Styrolblöcke jeweils aus mehr als 75 Gew.-%, vorzugsweise mehr als 85 Gew.-%, weiter bevorzugt mehr als 95 Gew.-%, noch besser 100 Gew.-%, bezogen auf das Gewicht des thermoplastischen Styrolblocks, Einheiten, die von einem oder mehreren Styrol-Monomeren abgeleitet sind, bestehen.

4. Zusammensetzung nach einem der vorhergehenden Ansprüche, **dadurch gekennzeichnet, dass** die thermoplastischen Styrolblöcke jedes verzweigten thermoplastischen Elastomers 20 bis 50 Gew.-%, vorzugsweise 20 bis 40 Gew.-%, des Gewichts jedes verzweigten thermoplastischen Elastomers ausmachen.

5. Zusammensetzung nach einem der vorhergehenden Ansprüche, **dadurch gekennzeichnet, dass** das bzw. die thermoplastischen Elastomere 70 bis 100 phe, vorzugsweise 80 bis 100 phe, der Zusammensetzung ausmachen.

6. Zusammensetzung nach einem der vorhergehenden Ansprüche, **dadurch gekennzeichnet, dass** das bzw. die verzweigten thermoplastischen Elastomere 100 phe der Zusammensetzung ausmachen.

7. Zusammensetzung nach einem der vorhergehenden Ansprüche, **dadurch gekennzeichnet, dass** das bzw. die thermoplastischen Styrolblöcke aus mehr als 75 Gew.-%, vorzugsweise mehr als 85 Gew.-%, weiter bevorzugt mehr als 95 Gew.-%, noch besser 100 Gew.-%, Einheiten, die von einem oder mehreren Styrol-Monomeren abgeleitet sind, bestehen.

8. Zusammensetzung nach einem der Ansprüche 3 bis 7, **dadurch gekennzeichnet, dass** es sich bei dem Styrol-Monomer der thermoplastischen Styrolblöcke um Styrol handelt.

9. Zusammensetzung nach einem der vorhergehenden Ansprüche, **dadurch gekennzeichnet, dass** das bzw. die thermoplastischen Styrolpolymere 15 bis 85 phe der Zusammensetzung ausmacht.

10. Zusammensetzung nach einem der vorhergehenden Ansprüche, **dadurch gekennzeichnet, dass** das bzw. die thermoplastischen Styrolpolymere, die in der erfindungsgemäßen Zusammensetzung verwendet werden können, 50 bis 85 phe der erfindungsgemäßen Zusammensetzung ausmachen und eine gewichtsmittlere Molmasse zwischen 50.000 und 100.000 g/mol aufweisen.

11. Zusammensetzung nach einem der Ansprüche 1 bis 9, **dadurch gekennzeichnet, dass** das bzw. die thermoplastischen Styrolpolymere, die in der erfindungsgemäßen Zusammensetzung verwendet werden können, 15 bis 50 phe der erfindungsgemäßen Zusammensetzung ausmachen und eine gewichtsmittlere Molmasse zwischen 120.000 und 200.000 g/mol aufweisen.

12. Zusammensetzung nach einem der vorhergehenden Ansprüche, **dadurch gekennzeichnet, dass** sie ein Vernetzungssystem umfasst, das aus Vulkanisationssystemen und Vernetzungssystemen auf Basis eines oder mehrerer Peroxide ausgewählt ist.

13. Zusammensetzung nach einem der Ansprüche 1 bis 11, **dadurch gekennzeichnet, dass** sie durch Elektronenbeschuss vernetzt wird.

14. Reifen mit mindestens einer Schicht, die aus einer Polymerzusammensetzung gemäß einem der Ansprüche 1 bis 13 besteht.

15. Reifen mit einer Lauffläche, umfassend eine Polymerzusammensetzung gemäß einem der Ansprüche 1 bis 13 in seiner gesamten Lauffläche oder einem Teil davon.

## Claims

1. Polymer composition comprising
a) 50 to 100 phr of one or more branched thermoplastic elastomers each comprising an unsaturated elastomer block and at least three thermoplastic styrene blocks, the thermoplastic styrene blocks of each branched thermoplastic elastomer representing from 15% to 50%, by weight of the weight of each branched thermoplastic elastomer,
b) 10 to 100 phr of one or more thermoplastic styrene polymers having a weight-average molecular mass of between 25 000 and 300 000 g/mol, preferably between 50 000 and 200 000 g/mol.

2. Composition according to any one of the preceding claims, **characterized in that** the branched thermoplastic elastomer(s) are in a star-branched form comprising at least three branches or in a dendrimer form.

3. Composition according to any one of the preceding claims, **characterized in that** the thermoplastic styrene blocks each consist of more than 75% by weight, preferably of more than 85% by weight, more preferably of more than 95% by weight, better still of 100% by weight, relative to the weight of the thermoplastic styrene block, of units derived from one or more styrene monomers.

4. Composition according to any one of the preceding claims, **characterized in that** the thermoplastic styrene blocks of each branched thermoplastic elastomer represent from 20% to 50%, preferably from 20% to 40%, by weight of the weight of each branch thermoplastic elastomer.

5. Composition according to any one of the preceding claims, **characterized in that** said thermoplastic elastomer(s) represent from 70 to 100 phr, preferably from 80 to 100 phr of the composition.

6. Composition according to any one of the preceding claims, **characterized in that** the branched thermoplastic elastomer(s) represent 100 phr of the composition.

7. Composition according to any one of the preceding claims, **characterized in that** the thermoplastic styrene polymer(s) consist of more than 75% by weight, preferably of more than 85% by weight, more preferably of more than 95% by weight, better still of 100% by weight, of units derived from one or more styrene monomers.

8. Composition according to any one of Claims 3 à 7, **characterized in that** the styrene monomer of the thermoplastic styrene blocks is styrene.

9. Composition according to any one of the preceding claims, **characterized in that** the thermoplastic styrene polymer(s) represent from 15 to 85 phr of the composition.

10. Composition according to any one of the preceding claims, **characterized in that** said thermoplastic styrene polymer(s) that can be used in the composition according to the invention represent from 50 to 85 phr of the composition according to the invention and have a weight-average molecular mass of between 50 000 and 100 000 g/mol.

11. Composition according to any one of Claims 1 to 9, **characterized in that** said thermoplastic styrene polymer(s) that can be used in the composition according to the invention represent from 15 to 50 phr of the composition according to the invention and have a weight-average molecular mass of between 120 000 and 200 000 g/mol.

12. Composition according to any one of the preceding claims, **characterized in that** it comprises a crosslinking system selected from vulcanization systems and crosslinking systems based on one or more peroxides.

13. Composition according to any one of Claims 1 to 11, **characterized in that** it is crosslinked by means of electron bombardment.

14. Tyre comprising at least one layer consisting of a polymer composition as defined in any one of Claims 1 to 13.

15. Tyre comprising a tread comprising a polymer composition as defined in any one of Claims 1 to 13 in all or part of its tread.
